# EUROPÄISCHE PATENTSCHRIFT

(11) **EP 1 004 851 B1**
(45) Veröffentlichungstag und Bekanntmachung des Hinweises auf die Patenterteilung: **02.01.2008**
(21) Anmeldenummer: 99123112.7
(22) Anmeldetag: 18.11.1999
(51) Int. Cl.: G01C 21/26

(54) **Adaptives Navigationssystem**
Adaptive navigation system
Système de navigation adaptatif

(30) Priorität: 25.11.1998 DE 19854399
(43) Veröffentlichungstag der Anmeldung: 31.05.2000
(73) Patentinhaber: Siemens VDO Automotive AG, 93055 Regensburg (DE)
(72) Erfinder: Löffert, Ralf, 65205 Wiesbaden (DE); Troedel, Bernhard, 35606 Solms (DE)

(56) Entgegenhaltungen:
- EP-A- 0 582 081
- DE-A- 4 211 556
- DE-A- 19 535 576
- JP-A- 5 118 866
- US-A- 5 177 685
- US-A- 5 184 303
- US-A- 5 528 501
- PATENT ABSTRACTS OF JAPAN vol. 1996, no. 06, 28. Juni 1996 (1996-06-28) & JP 08 044387 A (AQUEOUS RES:KK), 16. Februar 1996 (1996-02-16)

## Beschreibung

Die Erfindung bezieht sich auf ein Navigationssystem für ein Landfahrzeug mit einer Meßanordnung zur Lieferung von Positions-, Richtungs- und/oder Entfernungsdaten, mit einer Datenquellenanordnung zur Lieferung von Navigationsdaten, mit einer Eingabeanordnung wenigstens zur Eingabe eines Zielpunktes, mit einer Steueranordnung wenigstens zur Bestimmung eines Weges und zur Erzeugung von Navigationshinweisen, wobei in der Steuereinheit Informationen darüber abgespeichert sind, ob ein Fahrer in vorgegebenen Gebieten oder auf vorgegebenen Routen Ortskenntnisse besitzt, und mit wenigstens einer Ausgabeanordnung zur Ausgabe der Navigationshinweise.

Aus dem Dokument Funkschau 20, 1997, Seiten 70 bis 73, "Verkehrsfunk auf Abruf" ist das oben genannte Navigationssystem bekannt. Von einer CD-ROM werden digital codierte Navigationshinweise einer z.B. mit einem Mikroprozessor ausgebildeten Steueranordnung geliefert. Aus den Positionsdaten eines GPS-Systems (GPS=Global Positioning System) und den Richtungsdaten eines Kreiselkompasses ermittelt das Navigationssystem Positionsangaben über den Standort des Fahrzeugs. Nach einer Eingabe eines Zielpunktes führt das Navigationssystem einen Fahrer nach der Berechnung der Position des Fahrzeugs und der zu fahrenden Strecke durch akustische und optische Ausgaben zu diesem Zielpunkt. Hierbei werden auch von einem RDS-TMC-Empfänger gelieferte Verkehrshinweise berücksichtigt, um z.B. Ausweichrouten anzugeben. Durch ein solches System wird dem Fahrer ermöglicht, ein ihm unbekanntes Ziel ohne Ortskenntnis und Lesen von Straßenkarten anzusteuern.

Aus der JP-A-05118866 ist ein Navigationssystem bekannt, bei dem die Ausgabe von Navigationshinweisen ausgeschaltet wird, wenn in dem Navigationssystem abgespeichert ist, dass Ortskenntnis für die befahrene Straße vorliegt. Es wird nicht zwischen verschiedenen Fahrern unterschieden.

Aus der US-A-5 184 303 ist ein Navigationssystem bekannt, bei dem eine Routenplanung dadurch individualisiert wird, dass der Fahrer anhand eines eingegebenen persönlichen Codes identifiziert wird und die persönlichen Routenberechnungspräferenzen des identifizierten Fahrers in Betracht gezogen werden.

Der Erfindung liegt die Aufgabe zugrunde, ein Navigationssystem so zu verbessern, dass mehrere Personen bei Benutzung desselben Fahrzeugs personalisierte Navigationshinweise bekommen und die Ausgabe von Navigationshinweisen verbessert wird.

Die Aufgabe wird durch ein Navigationssystem mit den Merkmalen des Anspruchs 1 gelöst.

Erfindungsgemäß werden dem Fahrer Navigationshinweise gegeben, die individuell angepasst sind. In Gebieten oder auf Routen, in denen oder auf welchen der Fahrer Ortskenntnisse besitzt, können somit nur geringe Navigationshinweise gegeben werden. Für einen Fahrer sind in der Steueranordnung für bestimmte Gebiete Einstellungsdaten gespeichert, die angeben, welche Navigationshinweise der Fahrer erhalten möchte. Im Gegensatz zu dem bekannten Navigationssystem werden durch die Erfindung unnötige Navigationshinweise vermieden, gleichzeitig jedoch auch in Gebieten oder auf Routen, zu denen Ortskenntnis vorhanden ist, ein Mindestmaß an Navigationshinweisen sichergestellt. Hierdurch erhöht sich die Verkehrssicherheit, weil der Fahrer weniger abgelenkt wird.

Der Fahrer wird über einen Erkennungssensor ermittelt. Eine Spracherkennungseinrichtung eines Spracheingabesystems der Eingabeanordnung, eine automatische Sitzeinstellungsvorrichtung des Landfahrzeugs oder eine Schlüsselerkennungsvorrichtung des Landfahrzeugs können einen solchen Erkennungssensor bilden. Mittels einer Tastatur oder eines Trackballs der Eingabeanordnung kann ebenfalls ein Erkennungssensor gebildet werden.

Die Steueranordnung enthält ein Modul zur Fahrererkennung, welches aus den vom Erkennungssensor gelieferten Daten den das Fahrzeug bedienenden Fahrer aus gespeicherten Daten ermittelt und welches nach einer Zieleingabe durch den Fahrer anhand gespeicherter Einstellungen überprüft, ob der Fahrer in bestimmten Gebieten oder auf einer Route zum Ziel wenig Navigationshinweise benötigt. Die Einstellungen für einen Fahrer werden nach einer Eingabe über die Eingabeanordnung in der Steueranordnung gespeichert. Die Steueranordnung kann auch ein Lernmodul enthalten, welches die gefahrenen Routen speichert und für eine häufig benutzte Route die Einstellung speichert, dass für diese Route geringe Navigationshinweise ausgegeben werden.

Nach Empfang von bestimmten Verkehrshinweisen über die Datenquellenanordnung, welche das Gebiet oder die Route betreffen, für die der Fahrer geringe Navigationshinweise erhalten möchte, ist die Steueranordnung zur Ausgabe von genauen Navigationshinweisen vorgesehen.

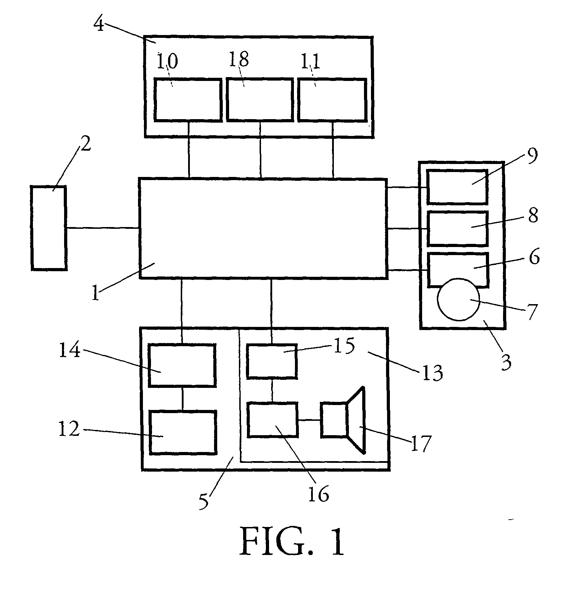

Ein Ausführungsbeispiel der Erfindung wird nachstehend anhand der Fig. 1 näher erläutert, die ein Blockschaltbild eines Navigationssystems für Landfahrzeuge zeigt.

In Fig. 1 ist ein Ausführungsbeispiel eines Navigationssystems für Landfahrzeuge als Blockschaltbild dargestellt. Das Navigationssystem enthält eine Steueranordnung 1, eine Messanordnung 2, eine Datenquellenanordnung 3, eine Eingabeanordnung 4 und eine Ausgabeanordnung 5. Die Steueranordnung 1 kann beispielsweise einen Mikroprozessor enthalten, der u.a. die Navigationsberechnungen durchführt und mit wenigstens einem Festwertspeicher (ROM) z.B. zur Ausführung eines Programms und einem Schreib- und Lesespeicher (RAM) zur Speicherung von Daten während des Betriebes gekoppelt ist.

Die Meßanordnung 2 liefert der Steueranordnung 1 Daten und enthält beispielsweise ein Tachometer, einen elektronischen Kompaß und eine GPS-Empfangseinheit (GPS = Global Positioning System). Gegebenenfalls enthält die Meßanordnung auch Radsensoren, die der Steueranordnung 1 Richtungs- und Entfernungsdaten von dem linken und rechten Vorder- oder Hinterrad des Fahrzeugs zuführen. Sonst werden die Richtungs- und Entfernungsdaten aus den vom Tachometer und dem elektronischen Kompaß abgegebenen Signalen ermittelt. Die GPS-Empfangseinheit berechnet anhand empfangener Satellitendaten die gegenwärtige Position des Fahrzeugs und gibt die berechneten Positionsdaten an die Steueranordnung 1 weiter. Diese von der GPS-Empfangseinheit gelieferten Positionsdaten weisen eine Ungenauigkeit von bis zu 100 Metern auf.

Die Datenquellenanordnung 3 enthält wenigstens eine Vorrichtung zur Lieferung digital codierter Navigationsdaten von einem Navigationsdatenspeicher an die Steueranordnung 1. Diese Vorrichtung kann beispielsweise ein CD-ROM-Laufwerk 6 sein, daß Daten eines bestimmten Bereichs (z.B. Deutschland) von einer CD-ROM 7 (Navigationsdatenspeicher) entnimmt. Weiter kann die Datenquellenanordnung 3 einen RDS-TMC-Empfänger 8 (RDS = Radio Data System, TMC = Traffic Message Channel) oder ein GSM-Modul 9 (GSM = Global System for Mobile Communication) enthalten, die digital codierte Verkehrsmeldungen empfangen und an die Steueranordnung 1 weitergeben. Das GSM-Modul kann des weiteren auch verwendet werden, um Telefongespräche zu führen.

Die Eingabeanordnung 4 enthält eine Tastatur 10 und gegebenenfalls einen Trackball 11. Ein Benutzer kann manuelle Eingaben über die Tastatur 10 und/oder den Trackball 11 durchführen. Die Tastatur 10 kann dabei auch Teil einer Fernbedienung sein. Die von einem Benutzer (z.B. Fahrer) des Navigationssystems gemachten Eingaben über die Eingabeanordnung 4 werden auch der Steueranordnung 1 zugeführt. Die Eingabeanordnung 4 kann ferner ein Spracheingabesystem 18 enthalten, welches ein Mikrofon mit einer nachgeschalteten Audiosignalverarbeitungsschaltung und eine Spracherkennungsanordnung enthält. Die erkannten Spracheingaben werden ebenfalls der Steueranordnung 1 zugeführt. Die Spracherkennungsanordnung kann auch Bestandteil der Steueranordnung 1 sein.

Die Ausgabeanordnung 5 weist eine Anzeigevorrichtung 12 und eine Sprachausgabeschaltung 13 auf. Zur Ansteuerung der Anzeigevorrichtung 12 dient noch eine ebenfalls in der Ausgabeanordnung 5 enthaltene Ansteuerschaltung 14. Bestandteil der Sprachausgabeschaltung 13 ist auch z.B. eine Sprachsysntheseschaltung 15, ein Verstärker 16 und ein Lautsprecher 17.

Die Steueranordnung 1 bestimmt zwischen wenigstens zwei Punkten (Start- und Zielpunkt) eine Strecke oder Route. Vor der Fahrt hat der Benutzer (z.B. Fahrer) über die Eingabeanordnung 4 mindestens den Zielpunkt einzugeben. Diese eingegebenen Daten werden in der Regel auch von der Ausgabeanordnung 5 zur Kontrolle für den Benutzer ausgegeben. Während der Fahrt werden dem Fahrer akustische oder optische Anweisungen von der Steueranordnung 1 mittels der Ausgabeanordnung 5 erteilt. Zur Durchführung z.B. der Streckenplanung und der Anweisungen verwendet die Steueranordnung 1 verschiedene Softwaremodule. Anhand der von der Meßvorrichtung 2 gelieferten Daten (Positions-, Richtungs- und Entfernungsdaten) und den von der Datenquellenanordnung 3 zugeführten Daten berechnet die Steueranordnung 1 mittels eines Softwaremoduls zur Positionsbestimmung den jeweiligen Positionspunkt des Fahrzeugs zu Beginn und während der Fahrt. Ein weiteres Modul zur Routenplanung berechnet jeweils die zu dem jeweiligen Zielpunkt zu fahrende Route anhand der von dem Softwaremodul zur Positionsbestimmung ausgegebenen Positionspunkt und dem Zielpunkt. Hierbei können auch z.B. von dem RDS-TMC-Empfänger 8 oder GSM-Modul 9 gelieferte Verkehrsmeldungen berücksichtigt werden, um beispielsweise den Fahrer anzuweisen, einen Stau zu umfahren. Ein Softwaremodul zur Routenangabe empfängt den jeweiligen Positionspunkt von dem Softwaremodul zur Positionsbestimmung, verschiedene Routenangaben von dem Softwaremodul zur Routenplanung und gegebenenfalls auch Navigationsdaten von der Datenquellenanordnung 3. Das Softwaremodul zur Routenangabe erzeugt Steuerdaten für die Sprachausgabe und für die bildliche Darstellung von Anweisungen. Es ist auch möglich, einen Landkartenausschnitt auf der Anzeigevorrichtung 12 mit der jeweiligen Positionsangabe darzustellen.

Das in Fig. 1 dargestellte Navigationssystem dient des weiteren zur Erkennung des das Fahrzeug benutzenden Fahrers, um individuelle, auf den Fahrer abgestimmte Navigationshinweise für vorgegebene Gebiete oder für vorgegebene Routen auszugeben. Hierbei werden in der Steueranordnung 1 mittels eines Moduls zur Fahrererkennung Daten ausgewertet, die von einer einen Fahrer kennzeichnenden Erkennungssensor geliefert werden. Ein solcher Erkennungssensor, welcher der Steueranordnung 1 eine Information über den Fahrer liefert, kann die Spracherkennungseinrichtung des Spracheingabesystems 18, eine automatische Sitzeinstellungsvorrichtung, eine Schlüsselerkennungsvorrichtung oder die Tastatur 10 bzw. der Trackball 11 nach einer manuellen Eingabe des Fahrers sein.

Die Spracherkennungsvorrichtung liefert beispielsweise eine Spracheingabe an das Modul zur Fahrererkennung. Das Modul zur Fahrererkennung vergleicht bestimmte Merkmale der Spracheingabe, um den jeweiligen Fahrer zu erkennen. Die nicht näher in der Fig. 1 dargestellte Sitzeinstellungsvorrichtung stellt eine Sitzposition für einen Fahrer anhand gespeicherter Einstellungsdaten ein. Diese Einstellungsdaten werden beispielsweise manuell über eine Taste vom jeweiligen Fahrer ausgewählt. Diese einen Fahrer kennzeichnende Tasteneingabe wird dem Modul zur Fahrererkennung der Steueranordnung 1 zugeführt. Der Fahrer kann ferner auch von einer Schlüsselerekennungvorrichtung erkannt werden. Hierbei weist jeder Schlüssel individuelle einen Fahrer kennzeichnende Merkmale auf, die von der Schlüsselerekennungseinrichtung detektiert werden. Diese Merkmale können beispielsweise vom Schlüssel zur Schlüsselerkennungsvorrichtung induktiv übertragen werden. Die vierte oben angegebene Möglichkeit zur Fahrererkennung wird mit Hilfe der Tastatur 10 bzw. des Trackballs 11realisiert. Über die Tastatur 10 oder den Trackball 11 gibt der Fahrer beispielsweise ein bestimmte ihn kennzeichnendes Wort (z.B. Paßwort) ein oder wählt aus einer auf der Anzeigevorrichtung 12 dargestellten Fahrerliste den entsprechenden Fahrer aus. Die Auswertung dieser Tastatur- oder Trackballeingabe führt das Modul zur Fahrererkennung durch.

Nach der Eingabe des Zielpunktes durch den Fahrer werden von der Steueranordnung 1 in Abhängigkeit von für den Fahrer gespeicherten Einstellungen für vorgegebene Gebiete oder für vorgegebene Routen davon abhängige Navigationshinweise für vorgegebene Gebiete oder für vorgegebene Routen ausgegeben. Beispielsweise sind für einen Fahrer die Einstellungen gespeichert, in welchen Gebieten oder auf welchen Routen er Ortskenntnisse besitzt. Weiter kann als Einstellung gespeichert sein, ob in den bekannten Gebieten oder auf den bekannten Routen überhaupt oder in welcher Häufigkeit Ansagen von der Sprachausgabeschaltung 13 bzw.

Anzeigen auf der Anzeigevorrichtung 12 erfolgen sollen. Beispielsweise könnte in dem Gebiet um Wetzlar, in dem ein Fahrer Ortskenntnisse besitzt, nach dem Beginn der Fahrt die grobe Ansage "zur A3 nach Süden" erfolgen, wenn der Startpunkt des Fahrers beispielsweise in Wetzlar und der Zielpunkt in Würzburg liegt. Es wird also bei Ortskenntnis des Fahrers in diesem Beispiel nur die grobe Richtung angesagt. Bei keiner Ortskenntnis des Fahrers gibt das Navigationssystem die genaue Route an.

Die Einstellungen für einen Fahrer können beispielsweise von diesem manuell über die Tastatur 10, den Trackball 11 oder das Spracheingabesystem 18 eingegeben werden. Diese Einstellungen können dabei für eine bestimmte Fahrt beispielweise mit der Eingabe eines Zielpunktes oder allgemein für alle Fahrten in einem Gebiet eingegeben und gespeichert werden. Ferner kann der Fahrer auch angeben, in welchen Gebieten er keine oder geringe und in welchen Gebieten er genaue Navigationshinweise benötigt.

Die Einstellungen können auch jeweils von der Steueranordnung 1 selbst durch ein Lernmodul erzeugt werden. So können beispielsweise die verschiedenen Routen eines Fahrers in der Steueranordnung 1 gespeichert werden und bei häufigerer Benutzung einer Route durch einen Fahrer erkennt dies die Steueranordnung 1 und verringert oder vermeidet die Navigationshinweise auf dieser häufig gefahrenen Route.

Falls über den RDS-TMC-Empfänger 8 oder über das GSM-Modul 9 Verkehrshinweise empfangen werden, welche das Gebiet oder die Route betreffen, in dem oder auf welcher der Fahrer keine oder geringe Navigationshinweise erhalten möchte, werden z.B. bei einem Stau, Nebel, Auftauchen eines Geisterfahrers etc. in dem bekannten Gebiet oder auf der bekannten Route wieder genaue Navigationshinweise ausgegeben.

## Patentansprüche

1. Navigationssystem für ein Landfahrzeug mit einer Messanordnung (2) zur Lieferung von Positions-, Richtungs- und/oder Entfernungsdaten, mit einer Datenquellenanordnung (3) zur Lieferung von Navigationsdaten, mit einer Eingabeanordnung (4) wenigstens zur Eingabe eines Zielpunktes, mit einer Steueranordnung (1) wenigstens zur Bestimmung eines Weges und zur Erzeugung von Navigationshinweisen und zur Speicherung von Informationen darüber, ob ein Fahrer in vorgegebenen Gebieten oder auf vorgegebenen Routen Ortskenntnisse besitzt, und wenigstens einer Ausgabeanordnung (5) zur Ausgabe der Navigationshinweise, **dadurch gekennzeichnet, dass** die Steueranordnung (1) nach Empfang von Daten von einem Erkennungssensor zur Ermittlung des das Landfahrzeug bedienenden Fahrers aus gespeicherten Daten vorgesehen ist und dass die Steueranordnung (1) zur Ausgabe von auf den Fahrer abgestimmten Navigationshinweisen derart vorgesehen ist, dass außerhalb der vorgegebenen Gebiete oder vorgegebenen Routen, in denen oder auf denen der das Landfahrzeug bedienende Fahrer Ortskenntnisse besitzt, genaue Navigationshinweise ausgegeben werden und in den vorgegebenen Gebieten oder auf den vorgegebenen Routen, in denen oder auf denen der das Landfahrzeug bedienende Fahrer Ortskenntnisse besitzt, Navigationshinweise als grobe Richtungsangabe oder in verringerter Anzahl ausgegeben werden.

2. Navigationssystem nach Anspruch 1, **dadurch gekennzeichnet, dass** eine Spracherkennungseinrichtung eines Spracheingabesystems (18) der Eingabeanordnung (4) den Erkennungssensor bildet.

3. Navigationssystem nach Anspruch 1, **dadurch gekennzeichnet, dass** eine automatische Sitzeinstellungsvorrichtung des Landfahrzeugs den Erkennungssensor bildet.

4. Navigationssystem nach Anspruch 1, **dadurch gekennzeichnet, dass** eine Schlüsselerkennungsvorrichtung des Landfahrzeugs den Erkennungssensor bildet.

5. Navigationssystem nach Anspruch 1, **dadurch gekennzeichnet, dass** mittels einer Tastatur (10) oder eines Trackballs (11) der Eingabeanordnung (4) der Erkennungssensor gebildet wird.

6. Navigationssystem nach Anspruch 1, **dadurch gekennzeichnet, dass** die Steueranordnung (1) ein Modul zur Fahrererkennung enthält, welches aus den vom Erkennungssensor gelieferten Daten den das Fahrzeug bedienenden Fahrer aus gespeicherten Daten ermittelt und welches nach einer Zieleingabe durch den Fahrer anhand gespeicherter Einstellungen überprüft, ob der Fahrer in bestimmten Gebieten oder auf einer Route zum Ziel nur grobe Richtungsangaben oder Navigationshinweise in verringerter Anzahl benötigt.

7. Navigationssystem nach Anspruch 6, **dadurch gekennzeichnet, dass** die Einstellungen für einen Fahrer nach einer Eingabe über die Eingabeanordnung (4) in der Steueranordnung (1) gespeichert werden.

8. Navigationssystem nach Anspruch 6, **dadurch gekennzeichnet, dass** die Steueranordnung (1) ein Lernmodul enthält, welches die gefahrenen Routen speichert und für eine häufig benutzte Route die Einstellung speichert, dass für diese Route geringe Navigationshinweise ausgegeben werden.

9. Navigationssystem nach Anspruch 6, **dadurch gekennzeichnet, dass** nach Empfang von bestimmten Verkehrshinweisen über die Datenquellenanordnung (3), welche das Gebiet oder die Route betreffen, in dem bzw. auf der der Fahrer Ortskenntnisse besitzt, die Steueranordnung (1) zur Ausgabe von genauen Navigationshinweisen vorgesehen ist.

## Claims

1. Navigation system for a land vehicle having a measurement arrangement (2) for supplying position, direction and/or distance data, having a data source arrangement (3) for supplying navigation data, having an input arrangement (4) at least for inputting a destination point, having a control arrangement (1) at least for determining a route and for producing navigation instructions and for storing information as to whether a driver has local knowledge in predetermined areas or on predetermined routes, and having at least one output arrangement (5) for outputting navigation instructions,
**characterized in that**, after receiving data from an identification sensor, the control arrangement (1) is intended to determine from stored data the driver who is operating the land vehicle, and **in that**, in order to output navigation instructions matched to the driver, the control arrangement (1) is provided in such a way that, outside the predetermined regions or off the predetermined routes in or on which the driver who is operating the land vehicle has local knowledge, detailed navigation instructions are output, and in predetermined regions or on predetermined routes in or on which the driver who is operating the land vehicle has local knowledge, the navigation instructions are output as rough direction details, or a reduced number of navigation instructions are output.

2. Navigation system according to Claim 1,
**characterized in that** a voice identification device of a voice input system (18) of the input arrangement (4) forms the identification sensor.

3. Navigation system according to Claim 1,
**characterized in that** an automatic seat adjustment apparatus for the land vehicle forms the identification sensor.

4. Navigation system according to Claim 1,
**characterized in that** a key identification apparatus for the land vehicle forms the identification sensor.

5. Navigation system according to Claim 1,
**characterized in that** the input arrangement (4) of the identification sensor is formed by a keypad (10) or a trackball (11).

6. Navigation system according to Claim 1,
**characterized in that** the control arrangement (1) contains a module for driver identification, which module uses data supplied from the identification sensor to determine from stored data the driver who is operating the vehicle and which, after the driver has input a destination, uses stored settings to check whether the driver requires only rough direction instructions or few navigation instructions, in specific regions or on a route to the destination.

7. Navigation system according to Claim 6,
**characterized in that**, after being input via the input arrangement (4), the settings for a driver are stored in the control arrangement (1).

8. Navigation system according to Claim 6,
**characterized in that** the control arrangement (1) contains a learning module which stores the routes driven and stores the setting for a frequently used route such that few navigation instructions are output for this route.

9. Navigation system according to Claim 6,
**characterized in that**, after receiving specific traffic information via the data source arrangement (3) which relates to the region or the route for which the driver has local knowledge, the control arrangement (1) is provided to output precise navigation instructions.

## Revendications

1. Système de navigation pour véhicule terrestre, comportant un dispositif de mesure (2) délivrant des données de position, de direction et/ou de distance, un dispositif à sources de données (3) délivrant des données de navigation, un dispositif de saisie (4) permettant au moins de saisir un point de destination, un dispositif de commande (1) permettant au moins de définir un parcours et de générer des indications de navigation et de mémoriser des informations indiquant si un conducteur a une connaissance des lieux dans des régions données ou sur des itinéraires donnés et, au moins, un dispositif de sortie (5) permettant d'éditer les indications de navigation, **caractérisé par le fait que** le dispositif de commande (1) est prévu pour déterminer, après réception de données par un capteur de reconnaissance, le conducteur servant le véhicule terrestre à partir de données mémorisées et que le dispositif de commande (1) est prévu pour éditer des indications de navigation adaptées au conducteur de telle façon que, en dehors des régions données ou des itinéraires donnés, dans lesquelles ou sur lesquels le conducteur servant le véhicule terrestre dispose de connaissances des lieux, des indications de navigation précises sont éditées et, dans les régions données ou sur les itinéraires donnés, dans lesquelles ou sur lesquels le conducteur servant le véhicule terrestre dispose de connaissances des lieux, les indications de navigation sont éditées sous la forme d'indications grossières de direction ou en nombre réduit.

2. Système de navigation selon la revendication 1, **caractérisé par le fait qu'**un dispositif de reconnaissance vocale d'un système de saisie vocale (18) du dispositif de saisie (4) forme le capteur de reconnaissance.

3. Système de navigation selon la revendication 1, **caractérisé par le fait qu'**un dispositif de réglage automatique du siège du véhicule terrestre forme le capteur de reconnaissance.

4. Système de navigation selon la revendication 1, **caractérisé par le fait qu'**un dispositif de reconnaissance des clefs du véhicule terrestre forme le capteur de reconnaissance.

5. Système de navigation selon la revendication 1, **caractérisé par le fait que** le capteur de reconnaissance est formé au moyen d'un clavier (10) ou d'une boule de pointage (11) du dispositif de saisie (4).

6. Système de navigation selon la revendication 1, **caractérisé par le fait que** le dispositif de commande (1) renferme un module de reconnaissance du conducteur qui détermine, à partir des données délivrées par le capteur de reconnaissance, le conducteur servant le véhicule en utilisant des données mémorisées et, après une saisie de la destination par le conducteur, vérifie, à l'aide de réglages mémorisés, si le conducteur n'a besoin, dans certaines régions ou sur un itinéraire vers la destination, que d'indications grossières de direction ou d'indications de navigation en nombre réduit.

7. Système de navigation selon la revendication 6, **caractérisé par le fait que** les réglages correspondant à un conducteur sont mémorisés dans le dispositif de commande (1) après une saisie à l'aide du dispositif de saisie (4).

8. Système de navigation selon la revendication 6, **caractérisé par le fait que** le dispositif de commande (1) renferme un module d'apprentissage qui mémorise les itinéraires parcourus et, pour un itinéraire fréquemment utilisé, mémorise le réglage selon lequel, pour cet itinéraire, peu d'indications de navigation doivent être éditées.

9. Système de navigation selon la revendication 6, **caractérisé par le fait que**, après réception, par l'intermédiaire du dispositif à sources de données (3), de certaines informations concernant le trafic routier et relatives à la région ou à l'itinéraire, dans laquelle ou sur lequel le conducteur dispose de connaissances des lieux, le dispositif de commande (1) est prévu pour éditer des indications de navigation précises.
